# EUROPÄISCHE PATENTSCHRIFT

(11) **EP 2 803 142 B1**
(45) Veröffentlichungstag und Bekanntmachung des Hinweises auf die Patenterteilung: **07.08.2019**
(21) Anmeldenummer: 13700674.8
(22) Anmeldetag: 11.01.2013
(51) Int. Cl.: H04B 5/00, H02J 5/00, H04L 12/10, H04L 25/02, H02J 7/02

(54) **MODULARES DATENSYSTEM MIT INDUKTIVER ENERGIEÜBERTRAGUNG**
MODULAR DATA SYSTEM HAVING INDUCTIVE ENERGY TRANSFER
SYSTÈME DE DONNÉES MODULAIRE AVEC TRANSMISSION D'ÉNERGIE PAR INDUCTION

(30) Priorität: 12.01.2012 DE 102012000409
(43) Veröffentlichungstag der Anmeldung: 19.11.2014
(73) Patentinhaber: Phoenix Contact GmbH & Co. KG, 32825 Blomberg (DE)
(72) Erfinder: SCHOLZ, Peter, 32683 Barntrup (DE); KALHOFF, Johannes, 32825 Blomberg (DE)
(74) Vertreter: Blumbach · Zinngrebe Patentanwälte PartG mbB
(86) Internationale Anmeldenummer: PCT/EP2013/050493
(87) Internationale Veröffentlichungsnummer: WO 2013/104758

(56) Entgegenhaltungen:
- EP-A1- 1 885 085
- DE-B4-102007 061 610
- US-B1- 6 803 744

## Beschreibung

Die Erfindung bezieht sich auf eine Vorrichtung zur elektrischen Energieversorgung und/oder Datenversorgung von Endgeräten über induktive Kopplung.

Das Phänomen der induktiven Kopplung ermöglicht eine kontaktlose Energieübertragung zwischen einem Sendegerät und einem Empfangsgerät, die sich durch Primärspule und Sekundärspule zu einem Transformator ergänzen. Beispiele für derartige Systeme sind in WO 98/15069 A1, EP 1 885 085 A1, DE 10 2007 060 811 A1 und DE 10 2007 061 610 B4 dargestellt. Bei der Kopplung der Geräte wird ein geschlossener magnetischer Kern gebildet oder nur geringe Luftspalte im Kern zugelassen, wodurch die kontaktlose Energieübertragung mit hohem Wirkungsgrad erfolgt. Dies setzt jedoch eine genaue räumliche Zuordnung von Primärspule zu Sekundärspule voraus, wodurch die Freiheit der räumlichen Positionierung von primärem Sendegerät zu sekundärem Empfangsgerät stark eingeschränkt wird.

Um von dieser Einschränkung der räumlichen Positionierung loszukommen, wird in US 7,262,700 B2 und US 2010/01328044 A1 vorgeschlagen, an einer Tischoberfläche des Sendegerätes Flachspulen als Primärspulen anzuordnen, die mit sekundären Flachspulen des Empfangsgeräts zusammenarbeiten, um dessen Stromversorgung zu bewerkstelligen. Das Empfangsgerät mit der Sekundärspule ist mobil und kann an jeder Position auf der Tischplatte des Sendegeräts mit Strom versorgt werden, wobei das Sendegerät abtastet, wo sich das Empfangsgerät befindet, um nur dort die Primärspule in Betrieb zu nehmen. Die wirksamen magnetischen Feldlinien zwischen Primärspule und Sekundärspule verlaufen senkrecht zur Tischoberfläche.

US 6,803,744 B1 betrifft eine induktive Energieübertragungsvorrichtung zum Aufladen der Batterie von schnurlosen Geräten. Ein Tisch beherbergt unterhalb der Tischoberfläche Anordnungen von Primärspulen, die über jeweilige Schalter eingeschaltet werden können und die mit Sekundärspulen der aufzuladenden Geräte kooperieren. Als aufzuladende Geräte wird ein Laptop-Computer und eine schnurlose Bohrmaschine in Betracht gezogen, die offenbar nach Aufladen ihrer Zweckbestimmung zugeführt werden.

Mit EP 2 067 148 B1 ist ein Sendegerät mit einer schienenartigen Ladehalterung zur Übertragung elektromagnetischer Energie an eine Vielzahl von elektronischen Vorrichtungen bekannt, und zwar sind entlang einer Schiene des Sendegerätes eine Vielzahl von sich überlappenden, flachen Primärspulen vorgesehen, die mittels Sensor die Anwesenheit eines Empfangsgerätes detektieren und dementsprechend primäre Flachspulen selektiv aktivieren. Die wirksamen magnetischen Feldlinien zwischen Primärspule und Sekundärspule verlaufen senkrecht zur Schienenoberfläche.

US 2003/0210106 A1 zeigt ein System der induktiven Kopplung zwischen einer plattenförmigen Primärseite des Sendegerätes und einer Sekundärseite des Empfangsgerätes. Die Primärseite weist eine Flachwicklung auf, bei der die Windungen spiralförmig oder in Rechteckform ineinander geschachtelt verlaufen, um über einer Tischfläche eine induktive Kopplung mit dem Empfangsgerät zu ermöglichen, dessen Position und Ausrichtung innerhalb eines aktiven Bereichs der Tischfläche frei wählbar ist. In diesem aktiven Bereich verlaufen die magnetischen Feldlinien im Wesentlichen parallel zur Tischfläche. Die Sekundärseite weist eine Wicklung um einen plattenförmigen oder zylindrischen Kern auf.

Mit WO2010/125048 A1 ist ein System zu berührungslosen Energie- und Datenversorgung von Busteilnehmermodulen bekannt, das innerhalb einer hutförmigen Tragschiene eine Versorgungsschiene umfasst, die eine Energie-Übertragungsschnittstelle und eine Daten-Übertragungsschnittstelle aufweist und die Busteilnehmermodule jeweils eine korrespondierende Energie-Übertragungsschnittstelle und eine korrespondierende Daten-Übertragungsschnittstelle aufweisen. Die Schnittstellen arbeiten aufgrund von spiralförmigen Flachspulen, deren Ebenen parallel zueinander verlaufen, so dass sich die Feldlinien senkrecht zur Längserstreckung der Tragschiene erstrecken.

Die US 2002/0021226 A1 bezieht sich auf ein elektrisches Gerät mit einer Monitorvorrichtung, einem Träger und einer Monitorvorrichtung für solch ein Gerät sowie eine diese Teile inkorporierende elektrische Installation. Es ist ein Schaltgerätgehäuse mit Trägerschienen zur Aufnahme von elektrischen Geräten vorgesehen, die jeweils eine Empfangsspule aufweisen. In einer ersten Bauweise gibt es Sendespulen an den Frontseiten des Schaltgerätgehäuses, in welchem sich zwei Schienen mit aufgesteckten Geräten erstrecken, in einer zweiten Bauweise gibt es eine Sendespule parallel zu zwei Schienen, auf denen die elektrischen Geräte aufgereiht sind, und in einer dritten Bauweise gibt es Hutschienen, in deren Innenraum sich jeweils eine einzige flachgedrückte Spule erstreckt, die somit eine Reihe von auf der Hutschiene aufgesteckten elektrischen Geräten energetisch versorgt. Eine Zuordnung von einzelnen Sendespulen zu einzelnen Empfangsspulen ist nicht möglich.

Elektronische Geräte werden oft in Schaltschränken untergebracht und häufig dabei entlang von Halteschienen aufgesteckt. Vielfach wird eine galvanische Trennung zwischen der Stromversorgung und den Nutz- oder Endgeräten gefordert. Solche Nutz- oder Endgeräte sind zwar mit ihrem Sockel an die Halteschiene angepasst, hinsichtlich der Abmessung in Längsrichtung der Schiene kommen aber beträchtliche Unterschiede vor. Bei schmalen Geräten ist die der Halteschiene gegenüberstehende Fläche recht klein, so dass induktive Kopplung zwischen der Stromversorgung und dem Nutz- oder Endgerät problematisch erscheint.

Der Erfindung liegt die Aufgabe zugrunde, auch schmale Nutz- oder Endgeräte, an einer Haltevorrichtung aneinandergereiht, kontaktlos mit elektrischer Energie und/oder mit Daten zu versorgen.

Diese Aufgabe wird gelöst durch eine Vorrichtung zur elektrischen Energieversorgung und/oder Datenversorgung von Endgeräten gemäß Anspruch 1.

Die Vorrichtung weist eine sich längs erstreckende Halteeinrichtung auf, welche die Halterung von Endgeräten nebeneinander in einer Reihe ermöglicht. Die Halteeinrichtung verfügt über eine Anzahl von nebeneinander angeordneten Sendespulen, deren Abmessung in Längsrichtung der Halteeinrichtung auf die Abmessung des schmälsten Endgerätes, in Längsrichtung der Halteeinrichtung gesehen, abgestimmt ist. Diese Abmessung, als Breite bezeichnet, liegt in derselben Größenordnung wie die Breite von baulich schmalen Endgeräten. Breitere Endgeräte können sich über die Breite von zwei oder mehreren Sendespulen erstrecken. Die Sendespulen sind zur Erzeugung von magnetischen Feldlinien mit einem nutzbaren

Anteil parallel zur Längserstreckung der Halteeinrichtung ausgebildet und sind einzeln schaltbar.

Soweit die Endgeräte kontaktlos über die Sendespulen versorgt werden sollen, weisen sie je mindestens eine Empfangsspule auf, die den nutzbaren Anteil der sich parallel zur Halteeinrichtung erstreckenden magnetischen Feldlinien auffängt und dem Endgerät nutzbar macht.

Die Empfangsspule wenigstens eines Endgerätes spannt eine Ebene quer zu dem nutzbaren Anteil der Feldlinien der Sendespulen auf. Eine solche Empfangsspule kann als eine Flachspule charakterisiert werden, deren Ebene senkrecht auf der Erstreckungsrichtung der Halteeinrichtung steht. Damit kann die Empfangsspule äußerst schmal ausgebildet sein und in jedem Endgerät untergebracht werden, auch wenn das Endgerät außerordentlich schmal gebaut ist.

Es ist auch möglich, zwei oder mehrere der flachen Empfangsspulen im Endgerät unterzubringen, etwa weil die elektrische Energieversorgung und die Datenversorgung im Endgerät getrennt werden sollen, oder weil mehrere, galvanisch voneinander getrennte Geräteteile mit Energie versorgt werden sollen.

Man kann bei baulich schmalen Endgeräten passend zugeordnete einzelne Sendespulen beaufschlagen und bei breiteren Endgeräten einzelne Sendespulen zu Sendespulengruppen zusammengeschalten, um eine virtuell längere Spule zu erreichen. Breitere Endgeräte können mit flachen Empfangsspulen versehen sein, müssen es aber nicht, um den nutzbaren Anteil des magnetischen Wechselfeldes aufzufangen.

Um magnetische Feldlinien mit einem wirksamen Anteil parallel zur Längserstreckung der Halteeinrichtung zu erzeugen, kann man schraubenförmige oder helixförmige Windungen zur Erzeugung von Spulen mit einem zylinderförmigen Mantel und zugehöriger Spulenachse parallel zur Längserstreckung der Halteeinrichtung vorsehen. Der wirksame Anteil der magnetischen Feldlinien verläuft außerhalb des Spulenmantels auf der Seite abgewandt zu der Halteeinrichtung. Ein ähnlicher Feldverlauf ergibt sich auch bei Abwandlung des zylinderförmigen Spulenmantels zu einer quaderförmigen oder elliptischen Struktur.

Der parallel zur Halteeinrichtung verlaufende wirksame Anteil der magnetischen Feldlinien wird von der mindestens einen Empfangsspule aufgefangen, deren Windungen spiralförmig um eine Öffnung verlaufen, deren Ebene durch eine Achse beschrieben werden kann, die sich parallel zur Längserstreckung der Halteeinrichtung erstreckt.

Zur Bündelung der magnetischen Feldlinien kann ein Spulenkern aus ferromagnetischem oder ferrimagnetischem Material eingesetzt werden, der die Feldlinien der Sendespule zu der Empfangsspule führt. Wenn die Positionierung der Endgeräte an der Haltevorrichtung relativ frei und flexibel gewählt werden soll, wird jeweils ein entsprechend breiter Kernspalt vorgesehen, oder man verzichtet ganz auf Spulenkerne, wodurch die Endgeräte behinderungsfrei an jeder Stelle entlang der Haltevorrichtung positioniert werden können. Spulen mit oder ohne Spulenkern können jedoch gegenüber störenden metallischen Körpern mittels ferromagnetischer oder ferrimagnetischer Materialien abgeschirmt werden.

Ein Ausführungsbeispiel der Erfindung wird anhand der Zeichnungen beschrieben. Dabei zeigen:
Fig. 1 einen Längsschnitt durch eine elektrische Energieversorgungseinrichtung,
Fig. 2 eine Einzelheit in perspektivischer Ansicht,
Fig. 3 einen Längsschnitt durch Spulen der Fig. 2, und
Fig. 4 ein Schema einer resonanten, induktiven Energieübertragung.

Die hauptsächlichsten Teile der Energieversorgungseinrichtung sind eine Halteeinrichtung 1, eine Schicht 2 von nebeneinander angeordneten Sendespulen 20 und eine Schicht 3 von nebeneinander angeordneten Endgeräten 31, 32, 33, 34. Die Halteeinrichtung 1 umfasst eine Schiene 10, an der die Endgeräte 31 bis 34 in einer Reihe nebeneinander, auch mit Lücke 35 dazwischen, festgeklammert werden können. Die Positionierung der Endgeräte entlang der Schiene ist frei oder flexibel und unterliegt keiner Rasterung.

Die Sendespulen 20 sind schraubenförmig oder helixförmig ausgebildet mit einem zylinderförmigen Mantel und einer Achse, die sich parallel zur Längserstreckung der Halteeinrichtung 1 erstreckt. Auch eckig oder elliptisch geformte Schrauben sind gut brauchbar. Alle derartigen Spulenformen werden als Helixspulen bezeichnet. Im dargestellten Ausführungsbeispiel sind sechs Sendespulen 20 vorgesehen, die einzeln zu und abgeschaltet werden können. Deren Stromzuführungen sind an der Halteeinrichtung 1 angebracht bzw. durch diese hindurchgeführt, aber nicht dargestellt. Wenn die Sendespulen 20 zur Datensignalübertragung verwendet werden, sind auch die entsprechenden Datenleitungen vorgesehen. Wenn die Sendespulen 20 einzeln geschaltet werden können, bedeutet dies, dass sie auch zu Gruppen zusammengeschaltet werden können, wie dies für das Endgerät 32 dargestellt ist. Jeder einzelnen Sendespule kann eine eigene Elektronik zugeordnet werden, um Parameter der Leistungsabgabe je Einzelspule regeln zu können, darunter Stromphase, Stromamplitude, Stromfrequenz. Die Elektronik kann auch einen Sensor umfassen, der Kopplungseffekte mit zugeordneten Empfangsspulen detektiert, um festzustellen, welches Endgerät benachbart ist oder ob ein Endgerät über die betreffende Sendespule überhaupt angesteuert werden kann (Feststellung einer Lücke in der Reihe der Endgeräte).

Die Sendespulen sind ohne Kern dargestellt, es könnte jedoch ein nicht geschlossener Kern mit Luftspalt an der Stelle, an der sich eines der Endgeräte befindet, vorhanden sein. Zweckmäßigerweise ist jedoch eine Ferritstruktur 21 zur Seite der Halteeinrichtung 1 angeordnet, um Störeinflüsse, die von Seiten der Halteeinrichtung einwirken könnten, von den Sendespulen abzuhalten. Außerdem werden Wirbelstromverluste in der möglicherweise metallischen Halteeinrichtung minimiert.

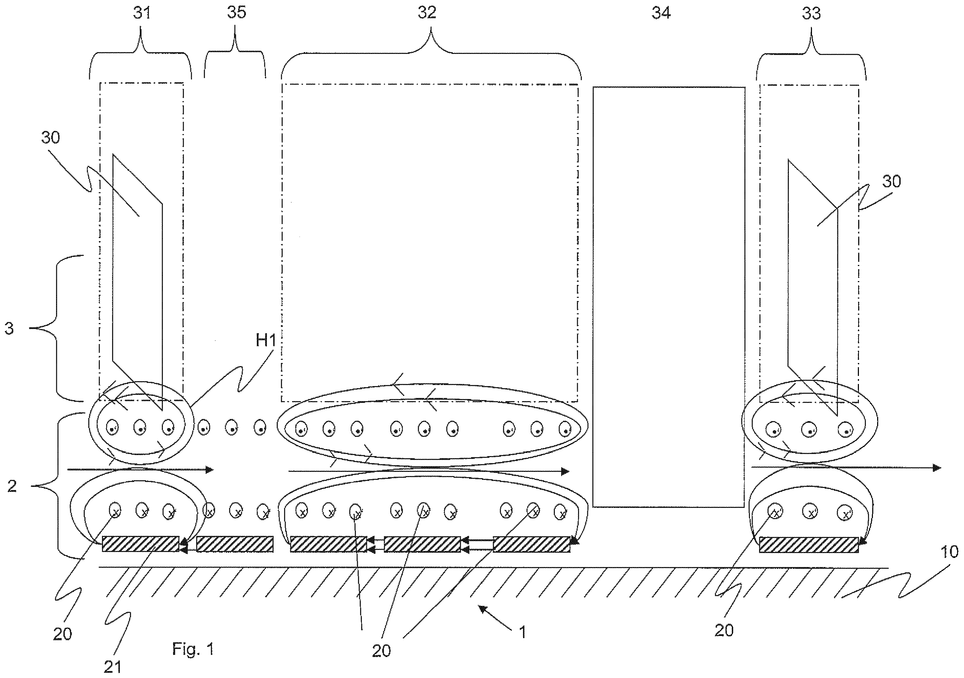

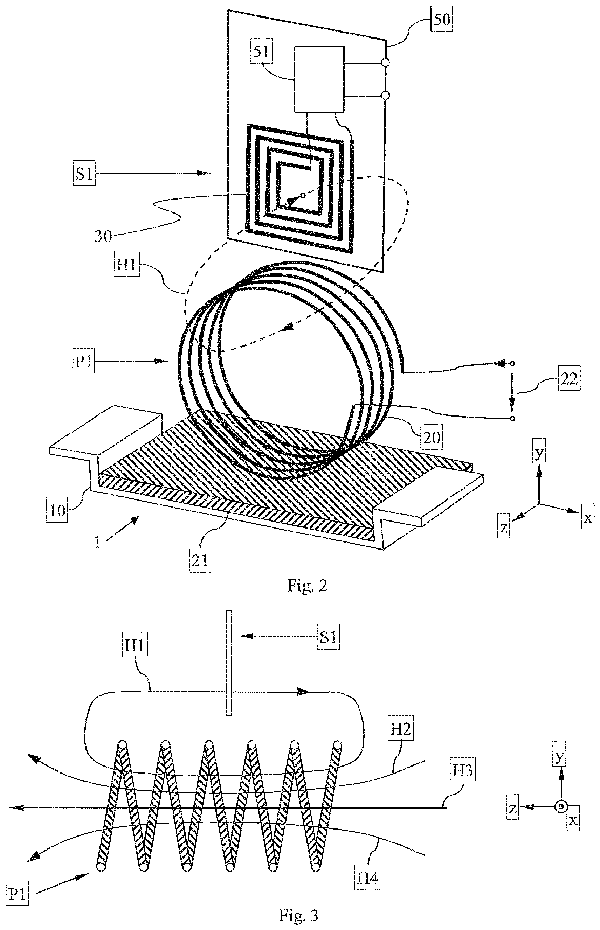

Wenigstens einige der Endgeräte beherbergen eine Flachspule 30, die als Empfangsspule mit der nächstgelegenen Sendespule 20 zusammenarbeitet. Die Windungen der flachen Empfangsspule 30 verlaufen spiralförmig, wobei unter spiralförmig auch eckig gewickelte, gedruckte oder abgeschiedene Gebilde zu verstehen sind, wie in Fig. 2 dargestellt. Die Empfangsspule 30 umschließt eine mittige Öffnung und definiert eine Ebene, deren Normale parallel, oder nahezu parallel, zur Längserstreckung der Halteeinrichtung 1 verläuft. Der in Fig. 1 horizontal verlaufende Anteil H1 der Feldlinien durchsetzt deshalb die Empfangsspule 30 und induziert eine Spannung bzw. einen Stromfluss, der zur elektrischen Energieversorgung des betreffenden Endgerätes ausgenutzt werden kann. In gleicher Weise kann ein solcher Stromfluss als Datensignal interpretiert werden. Auch der umgekehrte Informationsfluss ist möglich: Die Empfangsspule 30 kann auch als Sendespule geschaltet werden, um Daten vom Endgerät zu den als Empfangsspulen geschalteten Sendespulen zu übertragen. Dabei kann man sich der sogenannten "Lastmodulation" bedienen, bei der die Empfangsspule eine sich variierende Last darstellt, was an der Sendespule detektiert werden kann.

Für das Endgerät 32 sind drei einzelne Sendespulen 20 durch gemeinsame Aktivierung zu einer virtuell größeren Spule zusammengeschaltet, um ein gemeinsames magnetisches Feld für das Endgerät 32 zur Verfügung zu stellen. Dies kann beispielsweise für größere Stromaufnahmen genutzt werden oder um Geräte zu speisen, deren Baubreite die Rasterung der schmaleren Endgeräte 31, 33 übersteigt.

Die Sendespule bei der Lücke 35 ist stromlos geschaltet, wenn sich dort kein Endgerät befindet. Es können jedoch auch Stellen ohne Sendespule vorgesehen sein, wie bei dem Endgerät 34, das keine aktive Verbindung zum System aufweist oder einen Reserveplatz darstellt. Das System ist hier nicht aktiv. Über eine in der Tragschiene eingelegte Brücke kann beispielsweise die Speisespannung bzw. auch Dateninformationen entlang der Halteeinrichtung weitergegeben werden.

Fig. 2 zeigt schematisch, wie die Vorrichtung mit Primärspule P1 und Sekundärspule S1 zur induktiven Energieübertragung aufgebaut sein kann. Von der Halteeinrichtung 1 ist eine hutförmige Schiene 10 skizziert, auf der die Endgeräte in Reihe nebeneinander geklammert werden können. Die nicht dargestellten Gehäuse der Endgeräte sind an ihren Befestigungsenden bügelförmig ausgebildet und umgreifen die Sendespulen 20, um die Empfangsspulen 30 möglichst nahe zu der zugehörigen Sendespule 20 zu halten. Hierzu weisen die Gehäuse Klammern (nicht dargestellt) auf. Die Gehäuse der Endgeräte beherbergen jeweils mindestens eine Empfangsspule 30. In dem Hohlraum der hutförmigen Schiene 10 ist die zu Abschirmungszwecken vorgesehene Ferritstruktur 21 angeordnet. An der Ferritstruktur 21 ist die jeweilige Sendespule 20 befestigt, welche Magnetfeldlinien H1, H2, H3, H4 erzeugt (Fig. 3). Die zur Halteeinrichtung parallelen Magnetfeldlinien H1 bewirken den Energieeintrag in die Empfangsspule 30. Die Energie wird einer Elektronik 51 zur Verfügung gestellt, die auf einer Schaltungsplatte 50 angebracht sein kann.

Aus der skizzenmäßigen Darstellung der Fig. 2 ist klar ersichtlich, dass sich die Endgeräte an jeweils unterschiedlichen Stellen entlang der (aus zeichentechnischen Gründen verkürzt dargestellten) Schiene 10 festklammern können. Somit können die Endgeräte an jeder Stelle entlang der Schiene 10 positioniert werden.

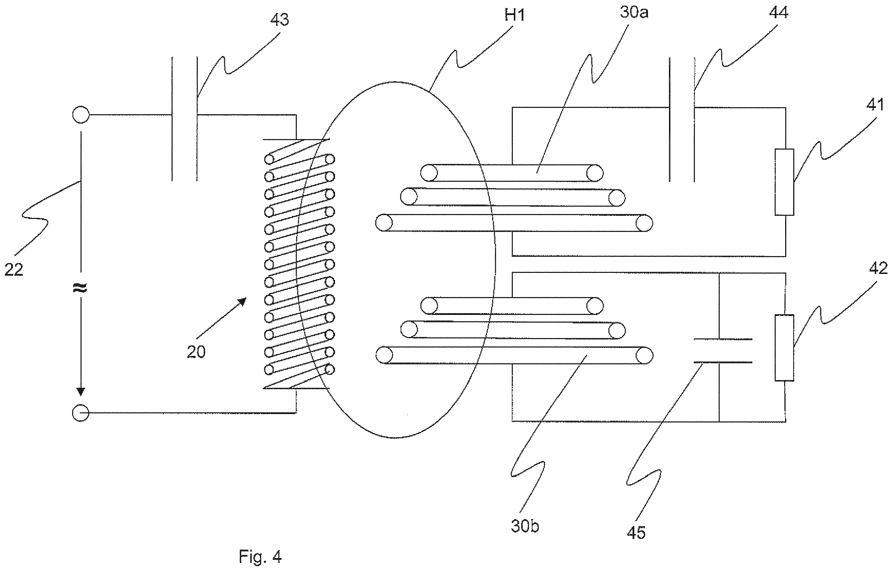

Die freie Positionierbarkeit der Empfangsspule hat jedoch den Nachteil der schwächeren Kopplung von Sendespule zur Empfangsspule. Um zu einer besseren Energieübertragung zu gelangen, werden Resonanzeffekte zwischen Sendespule und Empfangsspule ausgenutzt. Dies wird anhand der Fig. 4 erläutert. Eine Sendespule 20 und zwei Empfangsspulen 30a, 30b sind in induktiver Koppelbeziehung ohne Benutzung eines magnetischen Kerns angeordnet, was durch eine Feldlinie H1 angedeutet wird. Die Sendespule 20 hat eine größere Längserstreckung als die Empfangsspulen 30a, 30b, die als Flachspulen ausgebildet sind, so dass mehrere dieser Flachspulen entlang der länglichen Sendespule 20 angeordnet werden können. Die Spule 20 wird über eine alternierende Eingangsspannung 22 versorgt. Die Empfangsspulen 30a, 30b befinden sich jeweils in einem separaten Modul mit je einer Last 41, 42, welche die von der Spule 20 abgegebene Energie aufnehmen. Typischerweise bestehen diese Lasten aus je einer Gleichrichterschaltung, einem Glättungskondensator und einer daran angeschlossenen elektronischen Schaltung.

Der Energieübertrag zwischen der Sendespule 20 und den Empfangsspulen 30a, 30b ist dann besonders effizient, wenn sich die Schaltungen einschließlich der jeweiligen Spulen bei einer geeigneten Frequenz der Eingangsspannung in Resonanz befinden. Jeder Sendeschaltung mit Sendespule 20 und jeder Empfangsschaltung mit Sendespule 30a bzw. 30b kommt jeweils eine Resonanzfrequenz zu, die sich aus den Induktivitäten der jeweiligen Spulen und den Kapazitäten 43, 44, 45 zusammensetzen. Zu den Kapazitäten zählen auch kapazitive Kopplungseffekte zwischen den Spulenwindungen. Um die Resonanzen aneinander anzugleichen, können die jeweiligen Schaltungen noch diskrete Kondensatoren aufweisen, die in Reihe oder parallel zu den jeweiligen Spulen angeordnet sind. Zur Anpassung der Resonanzen sind auch Kombinationen aus Reihen- und Parallelschaltungen möglich. Mit der Angleichung der Resonanzfrequenz an die Arbeitsfrequenz der alternierenden Eingangsspannung 22 kann das System mit einem gesteigerten Wirkungsgrad betrieben werden. Außer der Nutzinduktivität, die durch die Feldlinie H1 angedeutet ist, gibt es eine Streuinduktivität, symbolisiert durch die Feldlinien H2, H3, H4. Der gute Wirkungsgrad kann dadurch erklärt werden, dass die Energie der Streufelder der Spulen 20, 30a, 30b zwischen den Spuleninduktivitäten und den jeweiligen Kapazitäten 43, 44, 45 gewissermaßen pendelt und idealerweise nicht verbraucht wird. Von der Eingangsspannung aus betrachtet, beinhalten die Verbraucher 41 und 42 nahezu nur Ohm' sche Anteile.

Um die Resonanzeffekte richtig ausnutzen zu können, ist jeder Sendespule 20 eine Regeleinrichtung (nicht dargestellt) zugeordnet, welche die Stromphase, die Stromamplitude und die Frequenz im Hinblick auf Resonanz mit der gekoppelten Empfangsspule 30 steuert.

## Patentansprüche

1. Vorrichtung zur elektrischen Energieversorgung und/oder Datenversorgung von Endgeräten, die Datensignale senden und/oder empfangen können, über induktive Koppelung, umfassend:
- eine sich längs erstreckende Halteeinrichtung (1),
- eine Anzahl von Endgeräten (31, 32, 33), die in Längserstreckungsrichtung der Halteeinrichtung unterschiedliche Breite aufweisen können und als schmale (31, 33) oder als breitere (32) Endgeräte auftreten,
- wobei die Halteeinrichtung (1) die Halterung der Endgeräten (31, 32, 33) nebeneinander, auch mit Lücken (35) dazwischen, in einer Reihe ermöglicht und hierzu eine Tragschiene (10) umfasst, welche eine freie Positionierbarkeit der Endgeräte an jeder Stelle entlang der Tragschiene (10) ermöglicht,
- eine Anzahl von nebeneinander angeordneten Sendespulen (20) entlang der Halteeinrichtung (1), wobei wenigstens einige der Sendespulen eine Abmessung in Längsrichtung der Halteeinrichtung aufweisen, die in derselben Größenordnung wie die Breite von schmalen Endgeräten (31, 33) liegt,
- die Sendespulen (20) sind zur Erzeugung von magnetischen Feldlinien mit einem nutzbaren Anteil parallel zur Längserstreckung der Halteeinrichtung ausgebildet und einzeln schaltbar, oder zu Gruppen zusammenschaltbar, wobei durch die Zusammenschaltung virtuell längere Spulen mit gemeinsamen magnetischem Feld entstehen, um breitere Endgeräte (32) bedienen zu können,
- zumindest einige der Endgeräte (31, 32, 33) weisen jeweils wenigstens eine Empfangsspule (30) auf, die jeweils eine Ebene quer zu dem nutzbaren Anteil der magnetischen Feldlinien der Sendespulen aufspannt,
- die Endgeräte (31, 32, 33) mit ihren Empfangsspulen (30) können den einzelnen oder zu Gruppen geschalteten Sendespulen (20) in der Weise geometrisch zugeordnet werden, dass elektromagnetische Kopplungen nur zwischen vorbestimmten Sendespulen und Empfangsspulen zur Energie- und/oder Datenversorgung genutzt werden,
- wobei durch Strombeaufschlagung einzelner Sendespulen oder von zusammengeschalteten Sendespulengruppen ein oder mehrere der Endgeräte kontaktlos mit Energie und/oder mit Datensignalen versorgt werden.

2. Vorrichtung nach Anspruch 1,
wobei die Windungen der Sendespulen (20) schraubenförmig sind und jeweils eine Helixspule mit einer Spulenachse parallel zur Längserstreckung der Tragschiene (10) der Halteeinrichtung (1) ergeben.

3. Vorrichtung nach Anspruch 1 oder 2,
wobei die Windungen der wenigstens einen Empfangsspule (30) spiralförmig verlaufen und eine Öffnung umschließen, die ein zur Längserstreckung der Tragschiene (10) der Halteeinrichtung (1) parallele Achse aufweist.

4. Vorrichtung nach einem der Ansprüche 1 bis 3,
wobei wenigstens einige der Sendespulen (20) mit je einer Ferritstruktur (21) versehen sind, die sich zur Lenkung und Schirmung der Feldlinien zwischen dem Mantel der Sendespule (20) und den angrenzenden Teilen der Halteeinrichtung (1) erstreckt.

5. Vorrichtung nach einem der Ansprüche 1 bis 4,
wobei wenigstens einige der Empfangsspulen (30) eine in Längserstreckungsrichtung gemessene Breite aufweisen, die nur einen Bruchteil der Breite jeder Sendespule (20) ausmacht, um eine relativ freie Arrangierbarkeit von schmalen Endgeräten (31) längs der Tragschiene (10) der Halteeinrichtung (1) zu erzielen.

6. Vorrichtung nach einem der Ansprüche 1 bis 5,
wobei die Tragschiene (10) der Halteeinrichtung (1) auch den Träger für die Strom- und Datensignalzuführungen der Sendespulen (20) bildet.

7. Vorrichtung nach einem der Ansprüche 1 bis 6,
wobei die Anordnung der Sendespulen (20) entlang der Halteeinrichtung (1) eine Lücke aufweist, um ein nicht aktives Gerät (34) aufzunehmen.

8. Vorrichtung nach Anspruch 7,
wobei die Lücke entlang der Halteeinrichtung (1) durch eine eingelegte Brücke überspannt wird, um Speisespannung und/oder Datensignale entlang der Halteeinrichtung weiterzuleiten.

9. Vorrichtung nach einem der Ansprüche 1 bis 8,
wobei Sendespulen (20) und zugehörige Empfangsspulen (30) so ausgelegt oder beschaltet sind, dass bei geeigneter Erregerfrequenz Resonanz zwischen gekoppelten Spulen auftritt.

10. Vorrichtung nach einem der Ansprüche 1 bis 9,
wobei die Sendespulen mit Sensoren verbunden sind, welche Kopplungseffekte detektieren, um bei fehlender oder schwacher Kopplung zwischen Sendespule (20) und Empfangsspule (30) die betreffende Sendespule außer Betrieb zu halten.

11. Vorrichtung nach einem der Ansprüche 1 bis 10,
wobei Gehäuse der Endgeräte Mittel zum Festklammern des betreffenden Endgerätes an der Tragschiene (10) umfassen.

## Claims

1. A device for electrical power supply and/or data supply to terminal devices that are capable of transmitting and/or receiving data signals via inductive coupling, comprising:
- a longitudinally extending support means (1);
- a number of terminal devices (31, 32, 33) that may have different widths in the direction of longitudinal extension of the support means and which come in the form of narrow (31, 33) or of wider (32) terminal devices;
- wherein the support means (1) allows the terminal devices (31, 32, 33) to be supported in a row, side by side, optionally with gaps (35) therebetween, and for this purpose comprises a support rail (10) which allows the terminal devices to be freely positioned at any location along the support rail (10);
- a plurality of adjacently arranged transmitting coils (20) along the support means (1), wherein at least some of the transmitting coils have a dimension in the longitudinal direction of the support means which is of the same order of magnitude as the width of narrow terminal devices (31, 33);
- wherein, for generating magnetic field lines, the transmitting coils (20) are designed to have a usable portion parallel to the longitudinal extension of the support means and can be switched individually, or can be interconnected to form groups, wherein the interconnecting results in virtually longer coils having a common magnetic field to be able to serve wider terminal devices (32);
- wherein at least some of the terminal devices (31, 32, 33) have at least one respective receiving coil (30) that spans a respective plane transverse to the usable portion of the magnetic field lines of the transmitting coils;
- wherein the terminal devices (31, 32, 33) with their receiving coils (30) can be geometrically associated with the individual transmitting coils (20) or with the transmitting coils (20) connected into groups in such a way that electromagnetic couplings are used for power supply and/or data supply only between predetermined transmitting coils and receiving coils;
- wherein, by applying power to individual transmitting coils or to interconnected transmitting coil groups, one or a plurality of the terminal devices are supplied with power and/or with data signals in a contactless manner.

2. The device according to claim 1,
wherein the windings of the transmitting coils (20) are helical and each form a helical coil with a coil axis parallel to the longitudinal extension of the support rail (10) of the support means (1).

3. The device according to claim 1 or 2,
wherein the windings of the at least one receiving coil (30) extend spirally and enclose an opening that has an axis parallel to the longitudinal extension of the support rail (10) of the support means (1).

4. The device according to any one of claims 1 to 3,
wherein at least some of the transmitting coils (20) are provided with a respective ferrite structure (21) that extends between the jacket of the transmitting coil (20) and the adjacent parts of the support means (1), for guiding and shielding the field lines.

5. The device according to any one of claims 1 to 4,
wherein at least some of the receiving coils (30) have a width measured in the direction of longitudinal extension that makes up only a fraction of the width of each transmitting coil (20), in order to allow for the narrow terminal devices (31) to be arranged relatively freely along the support rail (10) of the support means (1).

6. The device according to any one of claims 1 to 5,
wherein the support rail (10) of the support means (1) also provides the support for the power and data signal supply lines of the transmitting coils (20).

7. The device according to any one of claims 1 to 6,
wherein the arrangement of the transmitting coils (20) along the support means (1) has a gap to accommodate a non-active device (34).

8. The device according to claim 7,
wherein the gap along the support means (1) is spanned by an inserted bridge in order to forward supply voltage and/or data signals along the support means.

9. The device according to any one of claims 1 to 8,
wherein transmitting coils (20) and associated receiving coils (30) are designed or connected such that resonance occurs between coupled coils at a suitable excitation frequency.

10. The device according to any one of claims 1 to 9,
wherein the transmitting coils are connected to sensors that detect coupling effects in order to keep the respective transmitting coil out of operation in the case of lacking or weak coupling between the transmitting coil (20) and the receiving coil (30).

11. The device according to any one of claims 1 to 10,
wherein housings of the terminal devices have means for clamping the respective terminal device to the support rail (10).

## Revendications

1. Dispositif pour alimenter en énergie électrique et/ou pour alimenter en données des terminaux qui peuvent envoyer et/ou recevoir des signaux de données, par l'intermédiaire d'un couplage inductif, comprenant :
- un dispositif de retenue (1) s'étendant longitudinalement,
- un certain nombre de terminaux (31, 32, 33), qui peuvent présenter une largeur différente dans la direction d'étendue longitudinale du dispositif de retenue et se présenter sous la forme de terminaux étroits (31, 33) ou sous la forme de terminaux plus larges (32),
- dans lequel le dispositif de retenue (1) permet de retenir les terminaux (31, 32, 33) les uns à côté des autres sur une rangée, y compris avec des intervalles (35) entre eux, et comporte à cet effet un rail de support (10), lequel permet une possibilité de positionnement libre des terminaux à n'importe quel endroit le long du rail de support (10),
- un certain nombre de bobines émettrices (20) agencées les unes à côté des autres le long du dispositif de retenue (1), où au moins certaines des bobines émettrices présentent une dimension dans la direction longitudinale du dispositif de retenue qui est du même ordre de grandeur que la largeur des terminaux étroits (31, 33),
- les bobines émettrices (20) sont conçues pour générer des lignes de force magnétique présentant une part utilisable parallèlement à l'étendue longitudinale du dispositif de retenue et peuvent être connectées individuellement, ou interconnectées en groupes, où l'interconnexion permet d'obtenir des bobines virtuellement plus longues présentant un champ magnétique commun, afin de pouvoir utiliser des terminaux plus larges (32),
- au moins certains des terminaux (31, 32, 33) présentent respectivement au moins une bobine réceptrice (30), qui sous-tend respectivement un plan transversalement à la part utilisable des lignes de force magnétique des bobines émettrices,
- les terminaux (31, 32, 33), avec leurs bobines réceptrices (30), peuvent être affectés géométriquement aux bobines émettrices (20) individuelles ou connectées en groupes, de telle sorte que des couplages électromagnétiques ne sont utilisés qu'entre des bobines émettrices et des bobines réceptrices prédéfinies pour l'alimentation en énergie et/ou en données,
- dans lequel le fait que les bobines émettrices individuelles ou les groupes de bobines émettrices interconnectées soient parcouru(e)s par un courant permet d'alimenter sans contact un ou plusieurs des terminaux en énergie et/ou en signaux de données.

2. Dispositif selon la revendication 1,
dans lequel les spires des bobines émettrices (20) sont hélicoïdales et permettent d'obtenir respectivement une bobine hélicoïdale présentant un axe de bobine parallèle à l'étendue longitudinale du rail de support (10) du dispositif de retenue (1).

3. Dispositif selon la revendication 1 ou 2,
dans lequel les spires de l'au moins une bobine réceptrice (30) s'étendent en spirale et entourent une ouverture qui présente un axe parallèle à l'étendue longitudinale du rail de support (10) du dispositif de retenue (1).

4. Dispositif selon l'une quelconque des revendications 1 à 3,
dans lequel au moins certaines des bobines émettrices (20) sont pourvues chacune d'une structure ferritique (21), qui, pour diriger et protéger les lignes de force magnétique, s'étend entre l'enveloppe de la bobine émettrice (20) et les parties adjacentes du dispositif de retenue (1).

5. Dispositif selon l'une quelconque des revendications 1 à 4,
dans lequel au moins certaines des bobines réceptrices (30) présentent une largeur mesurée dans la direction d'étendue longitudinale qui ne représente qu'une fraction de la largeur de chaque bobine émettrice (20), afin d'obtenir une possibilité d'arrangement relativement libre de terminaux étroits (31) le long du rail de support (10) du dispositif de retenue (1).

6. Dispositif selon l'une quelconque des revendications 1 à 5,
dans lequel le rail de support (10) du dispositif de retenue (1) forme également le support pour les conduites d'amenée de courant et de signaux de données des bobines émettrices (20).

7. Dispositif selon l'une quelconque des revendications 1 à 6,
dans lequel l'agencement des bobines émettrices (20) le long du dispositif de retenue (1) présente un intervalle afin de loger un appareil (34) non actif.

8. Dispositif selon la revendication 7,
dans lequel l'intervalle le long du dispositif de retenue (1) est enjambé par un pont inséré, afin de transmettre une tension d'alimentation et/ou des signaux de données le long du dispositif de retenue.

9. Dispositif selon l'une quelconque des revendications 1 à 8,
dans lequel les bobines émettrices (20) et les bobines réceptrices (30) associées sont configurées ou câblées de telle sorte que, à une fréquence d'excitation adaptée, une résonance apparaît entre les bobines couplées.

10. Dispositif selon l'une quelconque des revendications 1 à 9,
dans lequel les bobines émettrices sont reliées à des capteurs, lesquels détectent des effets de couplage afin, dans le cas d'un couplage faible ou absent entre la bobine émettrice (20) et la bobine réceptrice (30), de maintenir la bobine émettrice concernée hors service.

11. Dispositif selon l'une quelconque des revendications 1 à 10,
dans lequel les boîtiers des terminaux comportent des moyens destinés à accrocher le terminal concerné au rail de support (10).
